(19) Europäisches Patentamt
European Patent Office
Office européen des brevets

(11) **EP 4 510 035 A1**

(12) **EUROPEAN PATENT APPLICATION**

(43) Date of publication:
**19.02.2025 Bulletin 2025/08**

(21) Application number: **24193870.3**

(22) Date of filing: **09.08.2024**

(51) International Patent Classification (IPC):
**G06F 30/367** $^{(2020.01)}$   **G01R 1/00** $^{(2006.01)}$
**H02J 3/00** $^{(2006.01)}$   G06F 119/06 $^{(2020.01)}$

(52) Cooperative Patent Classification (CPC):
**G06F 30/367; G01R 1/00; H02J 3/002;**
G06F 2119/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 TW 112130200**

(71) Applicant: **Chroma ATE Inc.
Taoyuan City 333001 (TW)**

(72) Inventors:
• **KUNG, Ling-Wei
333001 Taoyuan City (TW)**
• **HU, Guei-Cheng
333001 Taoyuan City (TW)**

(74) Representative: **Vossius & Partner
Patentanwälte Rechtsanwälte mbB
Siebertstrasse 3
81675 München (DE)**

(54) **AC POWER SUPPLY CAPABLE OF PROGRAMMING OUTPUT IMPEDANCE AND A METHOD FOR SIMULATING OUTPUT IMPEDANCE**

(57) The present invention provides an AC power supply capable of programming output impedance and a method for simulating output impedance. The method comprises the following steps. The simulating command, selectively provided by a control circuit, is associated with a voltage adjustment value and a phase adjustment value of a test circuit (S20). The control circuit calculates the voltage adjustment value and a preset voltage value to form a voltage command (S22), and calculates the phase adjustment value and a preset phase value to form a phase command (S24). A power supply circuit generates a simulated output voltage according to the voltage command and the phase command. The preset voltage value and the preset phase value are related to a preset output voltage provided by the power supply circuit, and the simulated output voltage is a simulation of the preset output voltage, provided by the power supply circuit, passed through the test circuit (S26).

providing a simulation command by the control circuit ⌐ S20

calculating a voltage adjustment value and a preset voltage value to form a voltage command ⌐ S22

calculating a phase adjustment value and a preset phase value to form a phase command ⌐ S24

generating a simulated output voltage according to the voltage command and the phase command ⌐ S26

FIG. 3

**Description**

**BACKGROUND OF THE INVENTION**

**CROSS REFERENCE TO RELATED APPLICATION**

The present application claims priority to Taiwan patent application Serial No. 112130200 filed on Aug. 11, 2023, the entire content of which is incorporated by reference to this application.

**1. Field of the invention**

The present invention pertains to an AC power supply and a control method thereof, more specifically to an AC power supply capable of programming output impedance and a method for simulating output impedance.

**2. Description of the prior art**

Generally, after the production of electronic devices or components, a series of tests must be conducted to ensure their functionality and safety. The industry has established numerous testing standards to standardize testing methods and results. For example, the existing testing standards IEC61000-3-3 and IEC61000-3-11 stipulate that a device under test (DUT) must undergo voltage fluctuations and examine its response to specific voltage differences. In practice, the industry refers to this type of testing as a flicker test. To implement the flicker test, a traditional AC power supply is often connected to an external testing circuit, which includes series resistors and inductors, thereby meeting the requirements of IEC61000-3-3 and IEC61000-3-11.

However, since the testing circuit consists of physical electronic components, changing to different resistance or inductance values typically requires hardware replacement, which can be inconvenient and may affect measurement accuracy. Therefore, the industry needs an AC power supply that allows for the flexible setting of various resistance and inductance values, making it easier for users to conduct various tests.

**SUMMARY OF THE INVENTION**

The invention provides a method for simulating output impedance, allowing an AC power supply to simulate conditions when connected to a specific output impedance, enabling the AC power supply to provide the corresponding output voltage.

The invention proposes a method for simulating output impedance for an AC power supply, which includes a control circuit and a power supply circuit. The method comprises the following steps: providing a simulation command by the control circuit; calculating, by the control circuit, a voltage adjustment value and a preset voltage value to form a voltage command; calculating, by the control circuit, a phase adjustment value and a preset phase value to form a phase command; and generating, by the power supply circuit, a simulated output voltage according to the voltage command and the phase command; wherein the simulation command is associated with the voltage adjustment value and the phase adjustment value of a test circuit; wherein the preset voltage value and the preset phase value are associated with a preset output voltage provided by the power supply circuit, and the simulated output voltage represents a voltage that simulates the preset output voltage provided by the power supply circuit after passing through the test circuit; wherein the simulated output voltage is used for a flicker test of a device under test.

In some embodiments, the test circuit consists of at least one resistor and one inductor connected in series, and the simulated output voltage represents the preset output voltage after passing through the resistance and the inductor connected in series. The voltage adjustment value simulates a voltage drop across the resistor and a voltage drop across the inductor, and the phase adjustment value simulates a phase shift of the simulated output voltage caused by the inductor. the voltage drop across the resistor is a product of a measured value of an output current provided by the power supply circuit and a resistance value of the resistor, and the voltage drop across the inductor is a product of the measured value of the output current and an impedance value of the inductor.

The invention provides an AC power supply that simulates conditions when connected to a specific output impedance, allowing the AC power supply to provide the corresponding output voltage.

The invention presents a programmable output impedance AC power supply, which comprises a control circuit and a power supply circuit. The control circuit selectively provides a simulation command related to a voltage adjustment value and a phase adjustment value of a test circuit. The control circuit calculates the voltage adjustment value against a preset voltage value to form a voltage command and calculates the phase adjustment value against a preset phase value to form a phase command. The power supply circuit generates a simulated output voltage based on voltage command and the phase command. The preset voltage value and the preset phase value relate to a preset output voltage provided by the power supply circuit, with the simulated output voltage representing that simulates the preset output voltage provided by the power supply circuit after passing through the test circuit. The simulated output voltage is used for a flicker test of a device under test.

In summary, the AC power supply and the method for simulating output impedance proposed by this invention calculate the voltage difference across the at least one resistor and the at least one inductor in the test circuit based on the preset output current. The power supply circuit adjusts the preset output voltage according to this voltage difference, allowing the adjusted output voltage to match the voltage after connection to the external test circuit. Thus, the AC power supply capable of programming output impedance and the method for simulating output impedance can facilitate various testing tasks for users without hardware replacement.

## BRIEF DESCRIPTION OF THE APPENDED DRAWINGS

FIG. 1 illustrates a block diagram of a conventional AC power supply.

FIG. 2 illustrates a block diagram of an AC power supply capable of programming output impedance according to an embodiment of the present invention.

FIG. 3 illustrates a flowchart of the steps for a method for simulating output impedance according to an embodiment of the present invention.

## DETAILED DESCRIPTION OF THE INVENTION

The features, targetions, and functions of the present invention are further disclosed below. However, it is only a few of the possible embodiments of the present invention, and the scope of the present invention is not limited thereto; that is, the equivalent changes and modifications done in accordance with the claims of the present invention will remain the subject of the present invention. Without departing from the spirit and scope of the invention, it should be considered as further enablement of the invention.

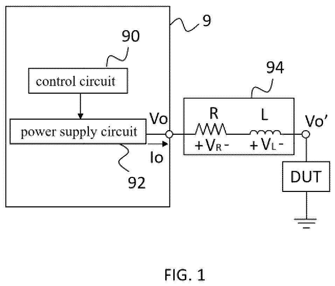

Before explaining an AC power supply capable of programming output impedance and a method for simulating output impedance described in the present invention, it is necessary to understand how conventional AC power supplies adjust their output impedance. Please refer to FIG. 1, which shows a block diagram of a conventional AC power supply. As illustrated in FIG. 1, the conventional AC power supply 9 has a control circuit 90 and a power supply circuit 92. The power supply circuit 92 is controlled by a digital control command from the control circuit 90, allowing the power supply circuit 92 to provide an output voltage Vo set by the digital control command. However, when conducting a flicker test on a device under test (DUT) according to IEC61000-3-3 and IEC61000-3-11 standards, the conventional AC power supply 9 requires a test circuit 94 to be connected. The test circuit 94 should have a resistor R and an inductor L connected in series that generates the specific test voltage Vo' needed for the test. Person having ordinary skill in the art will understand that the test circuit 94 will only have one specific set of resistor R and inductor L. To change the values of resistor R and inductor L, it is necessary to replace the test circuit 94 with another test circuit, which cannot effectively speed up the test.

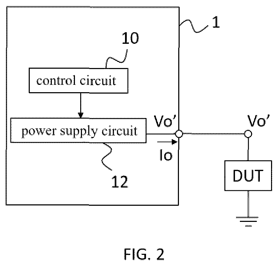

To address the issue of needing an additional/external test circuit, this embodiment demonstrates a programmable output impedance AC power supply. Please refer to FIG. 1 and FIG. 2; FIG. 2 shows a block diagram of the AC power supply capable of programming output impedance according to this embodiment. As shown, the AC power supply 1 has a control circuit 10 and a power supply circuit 12. The AC power supply 1 can simulate the presence of the test circuit 94 without being physically connected to the test circuit 94, thus allowing the power supply circuit to directly output the specific test voltage Vo'. The following example illustrates how the power supply circuit 12 directly generates the test voltage Vo' shown in FIG. 1 by simulating the test circuit 94.

In one example, the test voltage Vo' in FIG. 1 can be expressed by the following equation (1), which describes the current path from the power supply circuit 92 to the DUT. The power supply circuit 92 provides a preset output voltage Vo, followed by the voltage drop across the resistor R (denoted $V_R$) and the voltage drop across the inductor L (denoted $V_L$), ultimately yielding the test voltage Vo':

$$\text{Vo'} = \text{Vo} - (V_R + V_L) \hspace{2cm} (1)$$

In practice, the resistor R and the inductor L in the test circuit 94 should have known values (e.g., values that meet specific test standards). The output current from the power supply circuit 12 can be measured to obtain the measurement value Io. At this point, the voltage drop across the resistor R ($V_R$) can be expressed by equation (2), and the voltage drop across the inductor L ($V_L$) can be expressed by equation (3):

$$V_R = Io \times X_R = Io \times R \qquad (2)$$

$$V_L = Io \times X_L = Io \times 2\pi f\, L \qquad (3)$$

Where $X_R$ represents the impedance of the resistor R and $X_L$ represents the impedance of the inductor L. The impedance of the resistor should be the same the resistance value of the resistor. Therefore, $X_R$ in equation (2) can be expressed as R, and $X_L$ in equation (3) can be, similarly, expressed as L for simplicity. In other words, equation (2) indicates that the voltage drop across resistor R ($V_R$) is the product of the measured output current Io and the resistance value $X_R$, while equation (3) indicates that the voltage drop across inductor L ($V_L$) is the product of the measured output current Io and the impedance value $X_L$. In practice, the resistance value R can range from 0.4 to $1\Omega$, and the inductance value L can range from 0.1 to 2mH, with frequency f being 50Hz, this embodiment is not limited to these values. Returning to equation (1), as long as the power supply circuit 12 can output the test voltage Vo', it effectively simulates the voltage after the preset output voltage Vo passes through the resistor R and the inductor L. To achieve the aforementioned simulation result, this embodiment adjusts the command of the control circuit 10 to the control power supply circuit 12. In one example, when no flicker test is being conducted, the control circuit 10 can command the power supply circuit 12 to provide an output voltage Vo with a preset voltage and a preset phase value. During the flicker test, the control circuit 10 gives the simulation command to adjust the output voltage of power supply circuit 12 to become the test voltage Vo'.

In practice, the control circuit 10 can directly compute equations (2) and (3) to obtain the values of (Io$\times$R) and (Io$\times 2\pi$fL), which can then be used to simulate the voltage drops $V_R$ and $V_L$. Subsequently, the control circuit 10 derives a voltage adjustment value based on (Io$\times$R) and (Io$\times 2\pi$fL). Since the voltage drops $V_R$ and $V_L$ are reductions in voltage, the voltage adjustment value will be negative. Person having ordinary skill in the art will understand that simulating the voltage drop across resistor R ($V_R$) does not affect the phase of the output voltage Vo, while simulating the voltage drop across inductor L ($V_L$) will cause the output voltage Vo to shift its phase by 90 degrees (leading by 90 degrees). Therefore, to simulate the test voltage Vo', the phase of the output voltage Vo must also be adjusted. In other words, the voltage adjustment value determined by the control circuit 10 is used to simulate the voltage drop across the resistor R and the inductor L, and the control circuit 10 also requires a phase adjustment value to simulate the phase difference of the output voltage Vo across the resistor R and the inductor L.

For example, the control circuit 10 can use a phase conversion function H(S) as the phase adjustment value to adjust the phase of output voltage Vo, as represented by equation (4) below. Where fz is the zero point of the phase conversion function H(S). In this embodiment, fz can be set to 0.5Hz (resulting in approximately a 45-degree phase shift). To ensure the phase shift is 90 degrees, fz can be multiplied by 100 (which corresponds to the frequency of 50Hz as per IEC61000-3-3 and IEC61000-3-11 standards). Additionally, kp is a gain adjustment parameter, which is set to 0.01 to correct back to the original gain value after choosing fz multiplied by 100. Person having ordinary skill in the art will understand the interplay between the zero point and the gain adjustment parameter, and this embodiment will not elaborate further on this. Moreover, the poles $f_{P1}$ and $f_{P2}$ of the phase conversion function H(S) can be designed to be, for example, 1.8kHz and 2kHz. Designing them in the double pole frequency band serves to filter frequency noise, which will not affect the overall bandwidth of the system.

$$H(S) = k_P \frac{S + 2\pi f_Z}{(S + 2\pi f_{P1})(S + 2\pi f_{P2})} \qquad (4)$$

After the control circuit 10 obtains the voltage adjustment value, it can compute a voltage command corresponding to the test voltage Vo' by adding the voltage adjustment value to the preset voltage value. Similarly, after the control circuit 10 acquires the phase adjustment value, it can compute a phase command corresponding to test voltage Vo' by adding the phase adjustment value to the preset phase value. In practice, the voltage command and the phase command will enable the power supply circuit 12 to generate the corresponding test voltage Vo'. In this embodiment, the test voltage Vo' is referred to as the simulated output voltage, indicating that it represents the voltage resulting from the simulated preset output voltage Vo passing through the resistor R and the inductor L.

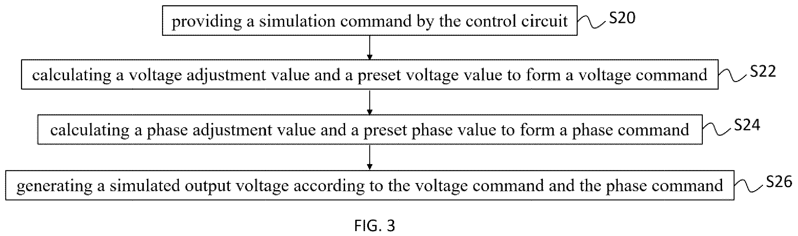

To illustrate the method of simulating output impedance in this embodiment, please refer to FIG. 1 to FIG.3. FIG. 3 presents a flowchart of the steps in the method for simulating output impedance according to this embodiment. As shown, in step S20, the control circuit 10 selectively provides a simulation command during the testing of the DUT (such as a flicker test). The simulation command is used to simulate the voltage adjustment value and phase adjustment value that the preset output voltage Vo would undergo through test circuit 94. In step S22, the control circuit 10 calculates the voltage adjustment value and the preset voltage value to form the voltage command. In step S24, the control circuit 10 calculates the phase adjustment value and the preset phase value to form the phase command. In step S26, the control circuit 10 sends the voltage command and phase command to the power supply circuit 12, allowing it to output the test voltage Vo'.

To sum up, the AC power supply and the method for simulating output impedance proposed by this invention calculate the voltage difference across the at least one resistor and the at least one inductor in the test circuit based on the preset output current. The power supply circuit adjusts the preset output voltage according to this voltage difference, allowing the adjusted output voltage to match the voltage after connection to the external test circuit. Thus, the AC power supply capable of programming output impedance and the method for simulating output impedance can facilitate various testing tasks for users without hardware replacement.

**Claims**

1. A method for simulating output impedance, configured to an AC power supply having a control circuit and a power supply circuit, comprising:

   providing a simulation command by the control circuit;
   calculating, by the control circuit, a voltage adjustment value against a preset voltage value to form a voltage command;
   calculating, by the control circuit, a phase adjustment value against a preset phase value to form a phase command; and
   generating, by the power supply circuit, a simulated output voltage according to the voltage command and the phase command;
   wherein the simulation command is associated with the voltage adjustment value and the phase adjustment value of a test circuit;
   wherein the preset voltage value and the preset phase value are associated with a preset output voltage provided by the power supply circuit, and the simulated output voltage represents a voltage that simulates the preset output voltage provided by the power supply circuit after passing through the test circuit.

2. The method for simulating output impedance according to claim 1, wherein the test circuit consists of at least one resistor and one inductor connected in series, and the simulated output voltage represents the preset output voltage after passing through the resistance and the inductor connected in series.

3. The method for simulating output impedance according to claim 2, wherein the voltage adjustment value simulates a voltage drop across the resistor and a voltage drop across the inductor, and the phase adjustment value simulates a phase shift of the simulated output voltage caused by the inductor.

4. The method for simulating output impedance according to claim 3, wherein the voltage drop across the resistor is a product of a measured value of an output current provided by the power supply circuit and a resistance value of the resistor, and the voltage drop across the inductor is a product of the measured value of the output current and an impedance value of the inductor.

5. The method for simulating output impedance according to claim 3, wherein the simulated output voltage is used for a flicker test of a device under test.

6. An AC power supply capable of programming output impedance comprising:

   a control circuit selectively providing a simulation command; and
   a power supply circuit generating a simulated output voltage based on a voltage command and a phase command;
   wherein the simulation command is associated with a voltage adjustment value and a phase adjustment value of a test circuit, the control circuit calculates the voltage adjustment value against a preset voltage value to form the voltage command, the control circuit calculates the phase adjustment value against a preset phase value to form the phase command;
   wherein the preset voltage value and the preset phase value are associated with a preset output voltage provided by the power supply circuit, and the simulated output voltage represents a voltage that simulates the preset output voltage provided by the power supply circuit after passing through the test circuit.

7. The AC power supply capable of programming output impedance according to claim 6, wherein the test circuit is composed of at least one resistor and one inductor connected in series, and the simulated output voltage is used to simulate the preset output voltage after passing through the series connected resistance and the inductor.

8.  The AC power supply capable of programming output impedance according to claim 7, wherein the voltage adjustment value is used to simulate a voltage drop across the resistor and a voltage drop across the inductor, and the phase adjustment value is used to simulate a phase shift of the simulated output voltage caused by the inductor.

9.  The AC power supply capable of programming output impedance according to claim 8, wherein the voltage drop across the resistor is a product of a measured value of an output current provided by the power supply circuit and a resistance value of the resistor, and the voltage drop across the inductor is a product of the measured value of the output current and an impedance value of the inductor.

10. The AC power supply capable of programming output impedance according to claim 8, wherein the simulated output voltage is used for a flicker test of a device under test.

FIG. 1

FIG. 2

providing a simulation command by the control circuit — S20

calculating a voltage adjustment value and a preset voltage value to form a voltage command — S22

calculating a phase adjustment value and a preset phase value to form a phase command — S24

generating a simulated output voltage according to the voltage command and the phase command — S26

FIG. 3

Europäisches
Patentamt

European
Patent Office

Office européen
des brevets

# EUROPEAN SEARCH REPORT

Application Number

EP 24 19 3870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JONKE PETER ET AL: "Concept of a three phase AC power source with virtual output impedance for tests of grid connected components", 2015 INTERNATIONAL SYMPOSIUM ON SMART ELECTRIC DISTRIBUTION SYSTEMS AND TECHNOLOGIES (EDST), IEEE, 8 September 2015 (2015-09-08), pages 399-404, XP032812150, DOI: 10.1109/SEDST.2015.7315242 [retrieved on 2015-11-02] * abstract * * page 399 - page 403 * * figures 1,3-4,8; table I * | 1-10 | INV. G06F30/367 G01R1/00 H02J3/00 ADD. G06F119/06 |
| X | LI ZEJIE ET AL: "Testing Requirements and Control Strategies of Next-Generation Grid Emulator: A Review", 2022 INTERNATIONAL POWER ELECTRONICS CONFERENCE (IPEC-HIMEJI 2022- ECCE ASIA), IEEJ-IAS, 15 May 2022 (2022-05-15), pages 1560-1566, XP034141898, DOI: 10.23919/IPEC-HIMEJI2022-ECCE53331.2022.9807056 [retrieved on 2022-07-01] * abstract * * page 1560 - page 1565 * * figures 3-10 * | 1-10 | |

TECHNICAL FIELDS
SEARCHED          (IPC)

G06F
H02J
G01R

-/--

The present search report has been drawn up for all claims

| Place of search | Date of completion of the search | Examiner |
|---|---|---|
| Munich | 18 December 2024 | Radev, Boyan |

EPO FORM 1503 03.82 (P04C01)

page 1 of 3

Europäisches
Patentamt

European
Patent Office

Office européen
des brevets

# EUROPEAN SEARCH REPORT

Application Number

EP 24 19 3870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG JIASHI ET AL: "Inertia and Grid Impedance Emulation of Power Grid for Stability Test of Grid-Forming Converter", IEEE TRANSACTIONS ON POWER ELECTRONICS, INSTITUTE OF ELECTRICAL AND ELECTRONICS ENGINEERS, USA, vol. 38, no. 2, 29 September 2022 (2022-09-29), pages 2469-2480, XP011927387, ISSN: 0885-8993, DOI: 10.1109/TPEL.2022.3210926 [retrieved on 2022-09-30] * abstract * * page 2469 - page 2473 * * figures 1-7 * | 1-4,6-9 | |
| A | PAUL CLARKSON ET AL: "Power Source Impedance Measurement System for Testing Compliance With IEC 61000-3-3", IEEE TRANSACTIONS ON INSTRUMENTATION AND MEASUREMENT, IEEE, USA, vol. 60, no. 7, 1 July 2011 (2011-07-01), pages 2320-2326, XP011326435, ISSN: 0018-9456, DOI: 10.1109/TIM.2011.2135430 * the whole document * | 1-10 | **TECHNICAL FIELDS SEARCHED (IPC)** |

-/--

The present search report has been drawn up for all claims

| Place of search | Date of completion of the search | Examiner |
|---|---|---|
| Munich | 18 December 2024 | Radev, Boyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ..................................................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 24 19 3870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI SINAN ET AL: "A General Approach to Programmable and Reconfigurable Emulation of Power Impedances", IEEE TRANSACTIONS ON POWER ELECTRONICS, INSTITUTE OF ELECTRICAL AND ELECTRONICS ENGINEERS, USA, vol. 33, no. 1, 1 January 2018 (2018-01-01), pages 259-271, XP011662035, ISSN: 0885-8993, DOI: 10.1109/TPEL.2017.2663424 [retrieved on 2017-10-06] * the whole document * | 1-10 | |
| A | MAURICIO CESPEDES ET AL: "Development of a grid simulator", CONTROL AND MODELING FOR POWER ELECTRONICS (COMPEL), 2012 IEEE 13TH WORKSHOP ON, IEEE, 10 June 2012 (2012-06-10), pages 1-8, XP032211894, DOI: 10.1109/COMPEL.2012.6251763 ISBN: 978-1-4244-9372-2 * the whole document * | 1-10 | |

TECHNICAL FIELDS
SEARCHED        (IPC)

The present search report has been drawn up for all claims

| Place of search | Date of completion of the search | Examiner |
|---|---|---|
| Munich | 18 December 2024 | Radev, Boyan |

EPO FORM 1503 03.82 (P04C01)

**REFERENCES CITED IN THE DESCRIPTION**

**Patent documents cited in the description**

- TW 112130200